# EUROPEAN PATENT SPECIFICATION

(11) **EP 0 542 740 B1**
(45) Date of publication and mention of the grant of the patent: **31.01.1996**
(21) Application number: 90912059.4
(22) Date of filing: 10.08.1990
(51) Int. Cl.: B29C 47/02, B29L 23/22

(54) **METHOD FOR COATING A STEEL PIPE BY EXTRUSION**
VERFAHREN ZUR BESCHICHTUNG EINES STAHLROHRS DURCH EXTRUSION
PROCEDE DE REVETEMENT PAR EXTRUSION D'UN TUBE D'ACIER

(43) Date of publication of application: 26.05.1993
(73) Proprietor: EUPEC Rohrbeschichtung GmbH, D-45355 Essen (DE)
(72) Inventor: LAANGNABBA, Rune, Jane-Erik, SF-66710 Kaitsor (FI); ANTELL, Mats, Tom, Christian, SF-66100 Malax (FI)
(74) Representative: Wennborg, Göte
(86) International application number: FI9000193
(87) International publication number: WO9202353

(56) References cited:
- DE-B- 1 629 716
- DE-B- 2 519 046
- FR-A- 1 580 059
- FR-A- 2 033 555
- FR-A- 2 290 295
- US-A- 4 451 413

## Description

The present invention relates to a method for coating a steel pipe by extrusion, which method comprises the steps of pretreating the steel pipe and leading the pretreated steel pipe through an extrusion tool, the pretreated steel pipe being led into the extrusion tool at a temperature below the solidification point of those plastic materials which are to be extruded, and coating the steel pipe in the extrusion tool with an adhesive layer and at least one thermoplastic layer, and heating the coated steel pipe by induction heating for achieving an effective adhesion between the steel pipe and the coating. Such a method is previously known from the US Patent Specification No. 4 451 413, but there is no clear teaching why the coated steel pipe is heated by induction heating.

According to further known solutions, the coating of a steel pipe occurs normally in such a way that the steel pipe is mainly immediately after the pretreatment, comprising e.g. warming-up, blasting, heating and a potential epoxy coating, led into an extrusion tool at as high a temperature as possible so that the activity on the epoxy layer does not decrease before the adhesive layer and the thermoplastic layer or layers are applied. It is namely generally believed that the adhesive capacity on an applied epoxy layer considerably decreases after it has hardened. For achieving as good an adhesion as possible, attempts are therefore made to lead the epoxy-coated steel pipe as rapidly as possible into the extrusion tool. When steel pipes are coated without epoxy, the best adhesion is obtained, if the surface temperature of the steel pipe is above the melting point of the plastic material. The coated steel pipe is then immediately led into a cooling bath to make the layers applied during the extrusion solidify. Such a method is especially suitable when thin plastic layers of only a few millimeters are applied to the steel pipe, since the cooling and thereby the solidification of the extruded plastic then occurs relatively quickly, but if the extruded layers have a considerable thickness, e.g. centering problems quickly occur. On the basis of the insulating capacity of plastics in connection with thick plastic layers, the cooling of the plastic namely takes place relatively slowly, because of which the first supporting point of the pipe after the extrusion tool must be located at an extremely long distance therefrom, which may make e.g. the centering of the steel pipe difficult. Since the cooling of coated steel pipes mainly takes place from the outer side, the applied plastic mass solidifies first on the outermost layer, from which the solidification slowly advances radially inward. The first supporting point of a coated pipe must therefore be located within such a distance from the extrusion tool, in which the cooling process has advanced through all plastic layers, whereby these obtain a sufficient bearing capacity. At every point along the pipe length, at which part of the plastic mass has a dough-like consistency, a risk arises in connection with a contact that the centering of the pipe is affected. Because of the long distance between the contact points, there is also a great risk that the applied plastic layers descend on the steel pipe, in which case the plastic layer on the upper side of the pipe becomes considerably thinner than the plastic layer on the lower side of the pipe. This is especially the case when a thick foamy plastic layer with a good insulating capacity is extruded on the steel pipe.

From the FR-patent specification no. 20 33 555, a method is known, according to which a foamy thermoplast layer for insulating purposes is applied to a steel pipe by means of an extrusion tool. In order to receive a regular cross section of the insulating layer the specification proposes the use of a cooling sleeve. There is no teaching of any subsequent induction heating.

The object of the present invention is to eliminate these problems especially when thick plastic layers are applied to steel pipes by extrusion during a single stage. This is achieved by means of a method of the kind stated above characterized by applying a relatively thick insulating layer of foamy thermoplast to the steel pipe in the extrusion tool and cooling the coated steel pipe before the induction heating.

The plastic mass to be extruded on the steel pipe normally has a temperature of ca. 200°C, whereas the temperature of the pretreated steel pipe entering the extrusion tool is < 100°C. This results in that the cooling and solidifying of the extruded plastic layers are started immediately when they come into contact with the steel pipe. Accordingly, the cooling of the extruded layer occurs considerably more quickly, since the quantity of heat stored in the steel pipe itself is much lower and is therefore not led away through the extruded layers into the cooling bath at the same time as the solidification at least in the initial phase occurs in two sections, i.e. from the inner and outer side of the extruded layers. The total quantity of heat to be transported away from the coated pipe is thereby considerably lower than in connection with previously known processes. The extruded layers therefore quickly reach a sufficient bearing capacity for supporting the weight of the pipe. When the cooling is completed, the adhesion of the extruded layers to the steel pipe is not yet completely satisfactory, but this is facilitated according to the invention in an effective manner, i.e. the steel pipe is next heated by induction heating. During the induction heating, the electromagnetic waves enter directly through the extruded plastic layers into the steel pipe without heating of the plastic layers. Since the steel pipe is heated, heat is conducted to the adjacent plastic layers, which are thereby heated to a plastic state. The internal tensions on the upper layers are then released, which creates a shrink force on the extruded plastic coating in such a way that this very effectively presses against the outer shell of the steel pipe, which is clearly indicated e.g. by the fact that the adhesive layer extruded on the epoxy layer presses out at the ends of the pipe.

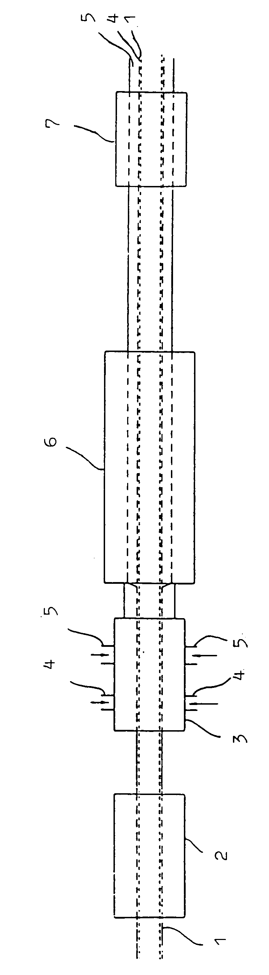

The invention is next described in more detail with reference to the accompanying drawing, which shows a basic scheme of a production line according to this invention.

The steel pipe 1 to be coated is pretreated on a pretreatment station 2, on which the steel pipe 1 is first heated in such a way that possible moisture is removed, after which the outer shell of the steel pipe is blasted for obtaining a clean and new steel surface. According to one embodiment of the invention, the blasted steel pipe 1 can be led directly into an extrusion tool 3 at a temperature, which is essentially below the melting point of plastic masses that are intended to be applied to the steel pipe in the extrusion tool 3. According to another embodiment, the blasted steel pipe 1 is heated to ca. 240°C, preferably by means of IR-radiation, and then led in the heated state through an epoxy coating unit of a pretreatment station 2, on which the epoxy powder is applied to the clean and heated steel surface. The epoxy coated steel pipe 1 is then allowed to cool so that its temperature is considerably below the melting point of plastic masses that are applied to the steel pipe 1 in the next extrusion stage, during which a so-called cross-head extruder 3 is preferably used. In the extrusion tool 3, an adhesive medium 4 as a relatively thin layer as well as at least a relatively thick layer of thermoplast 5 are applied to the steel pipe 1. Since the temperature of the steel pipe 1 entering the extrusion tool 3 is below the solidification point of the adhesive medium 4 and the thermoplast 5, the solidification process starts immediately, which results in that all extruded layers solidify relatively quickly and require a considerably shorter cooling bath 6 after the extrusion than in connection with conventional methods. The first support point of the extruded pipe 1 can thus be located quite near the extrusion tool 3. In this way, the extruded layers quickly reach a solidified state, and a pipe with good centering is obtained, but the adhesion to the steel pipe 1 or the epoxy surface is relatively low. This is facilitated according to the invention in such a way that the cooled steel pipe 1 coated by means of extrusion is heated in an induction heating unit 7, which by means of high-frequency electromagnetic waves heats the steel pipe 1, from which heat is conducted to the inner section of the extruded layers. In connection with this heating, the innermost layer melts, whereby the entire coating around the steel pipe 1 shrinks and a very good adhesion between the steel pipe and the plastic layers is achieved.

A suitable temperature for the steel pipe 1 entering the extrusion tool 3 has proven to be < 100°C. The extruded thermoplastic layer is a foamy insulating layer with optionally a compact protective layer. When, especially, steel pipes with a thick foamy insulating layer of e.g. polypropylene are coated, the inventive method has proven especially suitable. Another suitable embodiment is a steel pipe coated with an adhesive layer, a relatively thick foam layer and a thinner compact protective covering.

To be able to reach the desired cooling of the steel pipe 1 before its entry into the extrusion tool 3, especially when an epoxy coating stage is included in the pretreatment stage, the process can either be interrupted after the pretreatment stage and steel pipe 1 can be transferred to a waiting storage, or the distance between the pretreatment station 2 and the extruder 3 must be adjusted long enough.

In connection with the final induction heating, the steel pipe should preferably reach a surface temperature of ca. 160-180°C, which is approximately the same as the melting point of the adhesive layer.

## Claims

1. A method for coating a steel pipe (1) by extrusion comprising the steps of pretreating the steel pipe (1) and leading the pretreated steel pipe through an extrusion tool (3), the pretreated steel pipe being led into the extrusion tool at a temperature below the solidification point of those plastic materials (4, 5) which are to be extruded, and coating the steel pipe in the extrusion tool with an adhesive layer (4) and at least one thermoplastic layer (5), and heating the coated steel pipe (1) by induction heating (7) for achieving an effective adhesion between the steel pipe and the coating, **characterized** by applying a relatively thick insulating layer of foamy thermoplast (5) to the steel pipe (1) in the extrusion tool (3) and cooling the coated steel pipe before the induction heating.

2. A method according to claim 1, **characterized** by simultaneously applying a compact protective layer to the foam layer.

3. A method according to claim 1 or 2, **characterized** by warming-up and blasting the steel pipe (1) during the pretreatment (2) step.

4. A method according to claim 1 or 2, **characterized** by warming-up, blasting, heating and epoxy coating the steel pipe (1) during the pretreatment (2) step.

5. A method according to claim 4, **characterized** by transferring the steel pipe (1) to a waiting storage after the pretreatment for cooling it down to a desired temperature.

6. A method according to any of the preceding claims 1 to 5, **characterized** by adjusting the distance between the pretreatment station (2) and the extrusion tool (3) so that a sufficient cooling of the pretreated steel pipe (1) is obtained.

7. A method according to claim 5 or 6, **characterized** by finally heating the steel pipe (1) so that it reaches a temperature of ca. 160°C to 180°C, which is approximately the same as the melting point of the adhesive layer.

## Patentansprüche

1. Verfahren zum Beschichten eines Stahlrohrs (1) durch Extrusion, bei dem das Stahlrohr (1) vorbehandelt und das vorbehandelte Stahlrohr durch ein Extrusionswerkzeug (3) geleitet wird, wobei das vorbehandelte Stahlrohr bei einer unter dem Aushärtungspunkt der zu extrudierenden plastischen Materialien (4, 5) liegenden Temperatur in das Extrusionswerkzeug geleitet wird, und das Stahlrohr in dem Extrusionswerkzeug mit einer Klebstoffschicht (4) und wenigstens einer thermoplastischen Schicht (5) beschichtet und das beschichtete Stahlrohr (1) durch Induktionsheizung (7) erhitzt wird, um eine wirksame Verklebung des Stahlrohrs mit der Beschichtung zu erzielen, dadurch gekennzeichnet, daß eine relativ dicke Isolierschicht aus schaumigem Thermoplast (5) auf das Stahlrohr (1) in dem Extrusionswerkezeug (3) aufgebracht und das beschichtete Stahlrohr vor der Induktionsheizung abgekühlt wird.

2. Verfahren nach Anspruch 1, dadurch gekennzeichnet, daß gleichzeitig eine kompakte Schutzschicht auf die Schaumschicht aufgebracht wird.

3. Verfahren nach Anspruch 1 oder 2, dadurch gekennzeichnet, daß das Stahlrohr (1) während der Vorbehandlung (2) erwärmt und angeblasen wird.

4. Verfahren nach Anspruch 1 oder 2, dadurch gekennzeichnet, daß das Stahlrohr (1) während der Vorbehandlung (2) erwärmt, angeblasen, erhitzt und mit Epoxid beschichtet wird.

5. Verfahren nach Anspruch 4, dadurch gekennzeichnet, daß das Stahlrohr (1) nach der Vorbehandlung in einen Wartespeicher transferiert wird, um es auf eine gewünschte Temperatur abzukühlen.

6. Verfahren nach einem der vorstehenden Ansprüche 1 bis 5, dadurch gekennzeichnet, daß der Abstand zwischen der Vorbehandlungsstation (2) und dem Extrusionswerkzeug (3) so eingestellt wird, daß eine hinreichende Abkühlung des vorbehandelten Stahlrohrs (1) erzielt wird.

7. Verfahren nach Anspruch 5 oder 6, dadurch gekennzeichnet, daß das Stahlrohr (1) schließlich so erhitzt wird, daß es eine Temperatur von ca. 160°C bis 180°C erreicht, die etwa gleich dem Schmelzpunkt der Klebstoffschicht ist.

## Revendications

1. Procédé de revêtement d'un tube d'acier (1) par extrusion comprenant les phases consistant à prétraiter le tube d'acier (1) et faire passer le tube d'acier prétraité dans un outil d'extrusion (3), le tube d'acier prétraité étant passé dans l'outil d'extrusion à une température inférieure au point de solidification des matières plastiques (4, 5) devant être extrudées, et revêtir le tube d'acier dans l'outil d'extrusion d'une couche adhésive (4) et d'au moins une couche thermoplastique (5), et chauffer le tube d'acier revêtu (1) par chauffage à haute fréquence (7) pour obtenir une adhésion efficace entre le tube d'acier et le revêtement, caractérisé par l'application d'une couche isolante relativement épaisse de matière mousse thermoplastique (5) sur le tube d'acier (1) dans l'outil d'extrusion (3) et le refroidissement du tube d'acier revêtu avant le chauffage à haute fréquence.

2. Procédé selon la revendication 1, caractérisé par l'application simultanée d'une couche protectrice compacte sur la couche mousse.

3. Procédé selon la revendication 1 ou 2, caractérisé par le réchauffage et le décapage du tube d'acier (1) durant la phase de prétraitement (2).

4. Procédé selon la revendication 1 ou 2, caractérisé par le réchauffage, le décapage, le chauffage et le revêtement avec époxy du tube d'acier (1) durant la phase de prétraitement (2).

5. Procédé selon la revendication 4, caractérisé par le transfert du tube d'acier (1) jusqu'à une aire d'attente après le prétraitement pour le refroidir jusqu'à une température souhaitée.

6. Procédé selon l'une quelconque des revendications précédentes 1 à 5, caractérisé par le réglage de la distance entre le poste de prétraitement (2) et l'outil d'extrusion (3) de manière qu'un refroidissement suffisant du tube d'acier prétraité (1) soit obtenu.

7. Procédé selon la revendication 5 ou 6, caractérisé par le chauffage final du tube d'acier (1) de manière qu'il atteigne une température d'environ 160°C à 180°C, qui est approximativement la même que le point de fusion de la couche adhésive.
